# EUROPÄISCHE PATENTSCHRIFT

(11) **EP 3 067 102 B1**
(45) Veröffentlichungstag und Bekanntmachung des Hinweises auf die Patenterteilung: **16.05.2018**
(21) Anmeldenummer: 16158473.5
(22) Anmeldetag: 03.03.2016
(51) Int. Cl.: B01D 17/00, F02M 37/22

(54) **WASSERABSCHEIDER UND WASSERABSCHEIDESYSTEM MIT INTEGRIERTER WASSERAUSTRAGSEINRICHTUNG**
WATER SEPARATOR AND WATER SEPARATION SYSTEM WITH INTEGRATED WATER DISCHARGE DEVICE
SEPARATEUR D'EAU ET SYSTEME DE SEPARATION D'EAU COMPRENANT UN DISPOSITIF D'EVACUATION D'EAU INTEGRE

(30) Priorität: 11.03.2015 DE 102015003097
(43) Veröffentlichungstag der Anmeldung: 14.09.2016
(73) Patentinhaber: MANN + HUMMEL GMBH, 71636 Ludwigsburg (DE)
(72) Erfinder: Razgani, Idriss, 71638 Ludwigsburg (DE)
(74) Vertreter: Seyboth, Matthias

(56) Entgegenhaltungen:
- EP-A1- 1 389 273
- EP-A1- 2 532 405
- DE-A1-102013 202 718
- US-A- 5 690 813

## Beschreibung

### Technisches Gebiet

Die Erfindung betrifft einen Wasserabscheider und ein Wasserabscheidesystem für in Kraftstoff oder Öl enthaltenes Wasser mit einer integrierten Wasseraustragseinrichtung.

### Stand der Technik

Kraftstoffe oder Öl enthalten häufig Wasser, das zu Funktionsstörungen der mit dem Kraftstoff bzw. Öl betriebenen Maschinen, insbesondere Verbrennungsmotoren, führen kann. Zum Abscheiden bzw. Abtrennen des im Kraftstoff oder Öl enthaltenen Wassers werden deshalb seit langem Wasserabscheidesysteme mit einem Wasserabscheider eingesetzt. Die Wasserabscheider weisen nach einer Bauart ein Stützrohr auf, das beidenends mit einer Endscheibe versehen ist. Innerhalb des Stützrohrs ist ein Siebrohr angeordnet, das gemeinsam mit dem Stützrohr einen Wasserabscheidespalt begrenzt. Der Wasserabscheidespalt dient dem schwerkraftbedingten Absetzen des im Kraftstoff oder Öl enthaltenen Wassers und ist einenends mit einem am unteren Ende des Wasserabscheiders angeordneten Wasserauslass fluidisch verbunden.

Ein derartiger Wasserabscheider ist beispielsweise aus der DE 10 2010 030 987 A1 bekannt geworden.

Im Betrieb des Wasserabscheiders strömt das abgeschiedene Wasser in der Regel - der Schwerkraft folgend - aus dem Wasserabscheider in einen unterhalb des Wasserabscheiders angeordneten Wassersammelraum. Der Wassersammelraum kann beispielsweise durch das Abscheidergehäuse des Wasserabscheidesystems gebildet sein. Bei Erreichen eines maximalen Wasserfüllstandes innerhalb des Wassersammelraums muss das angesammelte Wasser jedoch aus dem Wassersammelraum entfernt werden. Das Gehäuse des Wasserabscheidesystems kann dazu beispielsweise eine bodenseitige Wasserablasseinrichtung, im konstruktiv einfachsten Fall eine sogenannte Ablassschraube, aufweisen. In der Praxis hat es sich bei engen Einbauverhältnissen, wie beispielsweise im Motorraum eines Kraftfahrzeugs, bewährt, wenn der Wasserabscheider selbst mit einer Wasseraustragseinrichtung versehen ist. Dadurch kann das in dem Wassersammelraum angesammelte Wasser bei Bedarf über den Wasserabscheider in Richtung nach oben aus dem Wassersammelraum ausgetragen werden.

Ein Wasserabscheider mit einer solchen integrierten Wasseraustragseinrichtung ist aus der DE 10 2009 058 812 A1 bekannt geworden. Die Wasseraustragseinrichtung des Wasserabscheiders weist eine Einlass- oder Ansaugöffnung auf, die am wasserauslassseitigen, d.h. im Einbauzustand des Wasserabscheiders unteren, Ende des Wasserabscheiders exzentrisch und von der zweiten Endscheibe axial beabstandet angeordnet ist. Eine Auslassöffnung der Wasseraustragseinrichtung ist der im Einbauzustand des Wasserabscheiders oberen Endscheibe des Wasserabscheiders zugeordnet und zur Längsachse des Wasserabscheiders exzentrisch angeordnet. Ein Anschluss der Wasseraustragseinrichtung an einen Wasseraustragsstutzen eines Abscheidergehäuses wird dadurch erschwert. Darüber hinaus benötigt der Wasserabscheider aufgrund der konstruktiven Ausgestaltung seiner Wasserabscheideeinrichtung einen relativ großen Einbauraum.

EP 2 135 659 A1 offenbart einen weiteren Wasserabscheider für in Kraftstoff enthaltenes Wasser. Der Wasserabscheider weist eine Wasserabscheideeinrichtung auf, die einem Partikelfiltermedium in Strömungsrichtung des Kraftstoffs vorgeschaltet ist und welche somit auf der sogenannten Roh- bzw. Schmutzseite des Wasserabscheiders angeordnet ist. Der Wasserabscheider weist infolgedessen ein weniger effizientes Wasserabscheidevermögen auf.

DE 10 2013 202718 A1 betrifft eine Filtervorrichtung mit einem Partikelfilter und einem Wasserabscheider, wobei der Wasserabscheider eine Stützhülse aufweist, auf die ein Siebgewebe aufgezogen ist. Ein Wassersammelraum befindet sich unter dem Wasserabscheider. Der Filter dort hat einen oben liegenden Wasserauslass, wobei eine koaxial zu der Stützhülse verlaufende Wasserführung vorgesehen ist, auf die an der unteren Stirnseite der Stützhülse ein Wasserableitrohr bzw. Schlauch aufgesteckt ist, das sich vom Zentrum mehrfach gebogen nach radial außen erstreckt.

Der aus EP 1 389 273 A1 bekannte Filter mit Wasserabscheider weist ein durchgängiges Wasseraustragsrohr auf, das in Längsrichtung des Filterelementes verläuft und exzentrisch zur Längsmittelachse angeordnet ist. Das Wasseraustragsrohr ragt unten in den Wassersammelraum ein und ist oben mit einem Wasseraustragsstutzen verbunden.

Schließlich ist aus US 5 690 813 A eine Separatorvorrichtung zur Aufreinigung von Abwässern bekannt, die über eine Zentrifuge verfügt, auf die das Rohwasser durch den Einlass geleitet wird. Das aufgereinigte Reinwasser verlässt die Separatoreinrichtung durch den Reinauslass, der über ein zentrisch und in Längsrichtung der Separatorvorrichtung verlaufendes Austragsrohr mit dem Wassersammelraum verbunden ist.

Aufgabe der Erfindung ist es, einen eingangs genannten Wasserabscheider sowie ein Wasserabscheidesystem anzugeben, die bei einer effizienten Abscheideleistung kompakt und kostengünstig zu fertigen sind und die bei einer vereinfachten Montage des Wasserabscheiders im Abscheidergehäuse des Wasserabscheidesystems zugleich einen Austrag von aus dem Kraftstoff oder Öl abgeschiedenem Wasser aus einem unterhalb des Wasserabscheiders angeordneten Wassersammelraum über den Wasserabscheider ermöglichen.

### Offenbarung der Erfindung

Die den Wasserabscheider betreffende Aufgabe wird durch einen Wasserabscheider mit den in Anspruch 1 angegebenen Merkmalen gelöst. Das erfindungsgemäße Wasserabscheidesystem weist die in Anspruch 14 angegebenen Merkmale auf. Weiterbildungen der Erfindung sind Gegenstand der Unteransprüche, der Beschreibung sowie der Zeichnung.

Der erfindungsgemäße Wasserabscheider kann mit einem besonders einfachen und kompakten Aufbau realisiert werden. Die Wasseraustragseinrichtung des Wasserabscheiders ermöglicht einen Wasseraustrag des aus dem Kraftstoff oder Öl abgeschiedenen und über den Wasserauslass aus dem Wasserabscheider herausgeführten Wassers aus einem unterhalb des Wasserabscheiders angeordneten Wassersammelraum eines Wasserabscheidesystems. Dadurch, dass die Auslassöffnung der Wasseraustragseinrichtung koaxial zur Längsachse des Wasserabscheiders angeordnet ist, wird eine Montage des Wasserabscheiders im Abscheidergehäuse eines Wasserabscheidesystems erheblich vereinfacht. So muss beim Anschluss der Auslassöffnung der Wasseraustragseinrichtung an einen Wasseraustragsstutzen des Abscheidergehäuses auf keine spezifische Drehlage des Wasserabscheiders relativ zum Abscheidergehäuse geachtet werden. Darüber hinaus kann dadurch das Risiko einer fehlerhaften Montage des Wasserabscheiders bzw. einer Beschädigung des Wasserabscheiders, entgegengewirkt werden.

Erfindungsgemäß sind die Einlassöffnung und die Auslassöffnung der Wasseraustragseinrichtung mittels eines ersten Wasseraustragsrohrs miteinander fluidisch verbunden, das innerhalb des Wasserabscheiders in Richtung der Längsachse des Wasserabscheiders verlaufend angeordnet ist. Das erste Wasseraustragsrohr ist zur Längsachse des Wasserabscheiders koaxial verlaufend angeordnet und bildet die Auslassöffnung. Die zur Längsachse des Wasserabscheiders koaxial verlaufende Anordnung des ersten Wasseraustragsrohrs bietet fertigungstechnische Vorteile und erlaubt eine besonders kostengünstige und einfache Herstellung des Wasserabscheiders.

Der Wasserabscheider kann erfindungsgemäß ein Stützrohr und ein innerhalb des Stützrohrs angeordnetes Siebrohr aufweisen, die gemeinsam einen Wasserabscheidespalt begrenzen. Der Wasserabscheidespalt steht einenends mit dem Wasserauslass in Verbindung. Das Siebrohr fungiert im Sinne eines Endabscheiders für das aus dem Kraftstoff oder Öl abzuscheidende Wasser und ermöglicht eine weiter verbesserte Abscheideeffizienz. Das Siebrohr kann diesbezüglich insbesondere hydrophobe Oberflächeneigenschaften aufweisen. Im Wasserabscheidespalt kann sich das Wasser schwerkraftbedingt aus dem Kraftstoff nach unten hin absetzen.

Das koaxial zur Längsachse des Wasserabscheiders und innerhalb des Siebrohrs verlaufend angeordnete erste Wasseraustragsrohr bietet bei dieser Bauart des Wasserabscheiders den Vorteil, dass der für die Wasserabscheideeffizienz des Wasserabscheiders wesentliche Wasserabscheidespalt durch das erste Wasseraustragsrohr nicht eingeengt wird. Eine Funktionsbeeinträchtigung des Wasserabscheiders kann dadurch zuverlässig vermieden werden.

Das erste Wasseraustragsrohr und das Siebrohr können erfindungsgemäß über Distanzelemente miteinander verbunden sein. Das Siebrohr und das erste Wasseraustragsrohr können dabei, bevorzugt gemeinsam mit den Distanzelementen, einstückig miteinander ausgebildet sein. Dadurch können das Siebrohr und das Wasseraustragsrohr als ein einziges Kunststoff-Spritzgussteil gefertigt und montiert werden. Dies bietet Kostenvorteile und ermöglicht geringe Fertigungstoleranzen des Wasserabscheiders.

Das Siebrohr kann darüber hinaus durch die Distanzelemente mit einem geringen Materialeinsatz innenseitig ausgesteift werden. Diese ist insbesondere beim Einsatz eines am Stützrohr außenseitig abgestützten Koaleszer- bzw. Partikelfiltermediums vorteilhaft.

Die Einlassöffnung der Wasseraustragseinrichtung ist durch ein zweites Wasseraustragsrohr gebildet. Das zweite Wasseraustragsrohr ist dabei erfindungsgemäß zur Längsachse des Wasserabscheiders in einer radialen Richtung, d.h. seitlich, versetzt angeordnet, wobei das erste und das zweite Wasseraustragsrohr über einen in radialer Richtung verlaufenden Verbindungskanal fluidisch miteinander verbunden sind. Dadurch kann der Wasserabscheider auch bei schwierigen Einbauverhältnissen in einem Abscheidergehäuse eines Abscheidesystems eingesetzt werden.

Der Verbindungskanal ist axial in Richtung der Einlassöffnung der Wasseraustragseinrichtung, d.h. auf seiner von der ersten Endscheibe wegweisenden Seite der zweiten (unteren Endscheibe), erfindungsgemäß durch eine Bodenscheibe verschlossen. Die Bodenscheibe kann dabei vorteilhaft einstückig, insbesondere als ein Kunststoff-Spritzgussteil, mit dem zweiten Wasseraustragsrohr ausgebildet sein. Dies bietet Kostenvorteile. Die Bodenscheibe kann darüber hinaus der dem Wasserauslass zugeordneten zweiten Endscheibe des Wasserabscheiders dichtend eingeklipst oder in anderer Weise gehalten sein.

Im Hinblick auf eine nochmals kostengünstigere und einfachere Fertigung des Wasserabscheiders können das Stützrohr und die beiden Endscheiben einstückig miteinander ausgebildet sein. Das Stützrohr und die beiden Endscheiben können dabei insbesondere als ein einziges Kunststoff-Spritzgussteil ausgeführt sein.

Zwischen dem Siebrohr und dem Wasseraustragsrohr ist vorzugsweise ein (reinseitiger) ringförmiger Steigkanal für den Kraftstoff bzw. das Öl ausgebildet. Der Steigkanal ist mit einem Fluidauslass des Wasserabscheiders für den Kraftstoff oder das Öl fluidisch verbunden. Der Fluidauslass ist im konstruktiv einfachsten Fall durch die im Betrieb des Wasserabscheiders obenliegend angeordnete erste Endscheibe gebildet oder durch diese in einer zur Längsachse des Wasserabscheiders radialen Richtung begrenzt.

Der Wasserabscheider kann erfindungsgemäß zwei Endscheiben, d.h. eine erste obere und eine zweite untere Endscheibe, aufweisen. Die beiden Endscheiben des Wasserabscheiders weisen dabei bevorzugt jeweils ein Dichtungselement zur umlaufend dichtenden Anlage des Wasserabscheiders an einem Abscheidergehäuse eines Wasserabscheidesystems auf. Die Dichtungselemente können dabei in einer umlaufenden Nut der jeweiligen Endscheibe angeordnet sein, die innenumfangsseitig oder außenumfangsseitig an der Endscheibe ausgebildet ist. Das Dichtungselement besteht vorzugsweise aus einem Elastomer und kann insbesondere als ein O-Ring ausgeführt sein.

Die Abscheideleistung des Wasserabscheiders kann durch den Einsatz eines Koaleszermediums nochmals weiter verbessert werden. Das Koaleszermedium ist dabei bevorzugt zwischen den beiden Endscheiben ringförmig um das Stützrohr herum angeordnet und an diesem, vorzugsweise direkt, abgestützt. Bei dieser Bauart ist das Koaleszermedium somit von dem Kraftstoff bzw. Öl in einer zur Längsachse des Wasserabscheiders radialen Richtung von außen nach innen durchströmbar.

Der Wasserabscheider kann nach einer erfindungsgemäßen Ausführungsform zusätzlich oder alternativ ein Partikelfiltermedium aufweisen, das zwischen den beiden Endscheiben ringförmig um das Stützrohr herum angeordnet ist. Das Partikelfiltermedium ist dabei vorzugsweise beidenends in den Endscheiben eingebettet gehalten oder mit den Endscheiben fluiddicht verschweißt/verklebt. Bei dieser Bauart dient der Wasserabscheider somit zugleich einem Herausfiltern von partikulären Verunreinigungen aus dem Kraftstoff bzw. Öl. Mit anderen Worten ist der Wasserabscheider als ein Kombinationsabscheider ausgebildet.

Das vorgenannte Koaleszer- bzw. Partikelfiltermedium wird durch die beiden Endscheiben des Wasserabscheiders vorteilhaft in axialer (bzw. auch in radialer) Richtung überdeckt. Beim Einbau des Wasserabscheiders in ein Abscheidergehäuse eines Wasserabscheidesystems kann so eine unerwünschte Beschädigung des Koaleszer- bzw. Partikelfiltermediums vermieden werden.

Das erfindungsgemäße Wasserabscheidesystem umfasst ein Abscheidergehäuse mit einem vorstehend erläuterten Wasserabscheider, der im Abscheidergehäuse angeordnet ist. Das Abscheidergehäuse weist einen bodenseitigen Wassersammelraum auf, der unterhalb des Wasserauslasses des Wasserabscheiders angeordnet ist. Die Einlassöffnung der Wasseraustragseinrichtung des Wasserabscheiders ist im Wassersammelraum des Abscheidergehäuses angeordnet. Das Abscheidergehäuse weist einen Wasseraustragsstutzen auf, der mit der Auslassöffnung Wasseraustragseinrichtung des Wasserabscheiders fluidisch verbunden ist. Der Wasseraustragsstutzen des Abscheidergehäuses kann, sofern die Auslassöffnung der Wasseraustragseinrichtung des Wasserabscheiders durch das erste Wasseraustragsrohr gebildet ist, insbesondere auf das erste Wasserauftragsrohr (dichtend) aufgesteckt sein oder aber sich in das erste Wasseraustragsrohr (dichtend) hineinerstrecken.

Nach einer bevorzugten Weiterbildung der Erfindung kann der Wassersammelraum des Abscheidergehäuses bodenseitig eine Vertiefung aufweisen, die zur Längsachse des Wasserabscheiders seitlich versetzt angeordnet ist und die die Längsachse des Wasserabscheiders vorzugsweise ringförmig umgreift. Das zweite Wasseraustragsrohr der Wasseraustragseinrichtung des Wasserabscheiders erstreckt sich in diesem Falle mit seiner Einlassöffnung in diese Vertiefung hinein. Dadurch wird einerseits ein vollständiger bzw. ein nahezu vollständiger Wasseraustrag von in dem Wassersammelraum angesammeltem Wasser über den Wasserabscheider nach oben ermöglicht. Andererseits kann dadurch am Gehäuseboden des Abscheidergehäuses eine Sensoreinheit auf der Längsachse des Wasserabscheiders angeordnet sein, um einen Wasserfüllstand innerhalb des Wassersammelraums zu erfassen.

### Kurze Beschreibung der Zeichnung

Die Erfindung wird nachstehend anhand eines in der Zeichnung wiedergegebenen Ausführungsbeispiels erläutert. In der Zeichnung zeigen:
- Fig. 1: einen Wasserabscheider mit einem Partikelfiltermedium und mit einer dem Partikelfiltermedium fluidisch nachgeschalteten Wasserabscheideeinrichtung, die ein Koaleszermedium sowie ein als Endabscheider dienendes Siebrohr aufweist, wobei der Wasserabscheider eine Wasseraustragseinrichtung mit einem abschnittsweise innerhalb des Siebrohrs angeordneten Wasseraustragsrohr umfasst, in einem Längsschnitt;
- Fig.2: ein weiteres Ausführungsbeispiel eines Wasserabscheiders mit einem im Vergleich zu dem Wasserabscheider gemäß Fig. 1 vereinfachten Aufbau, in einem Längsschnitt; und
- Fig.3: ein Wasserabscheidesystem mit einem Abscheidergehäuse und einem im Abscheidergehäuse angeordneten Wasserabscheider gemäß Fig. 1, in einem Längsschnitt.

### Ausführungsformen der Erfindung

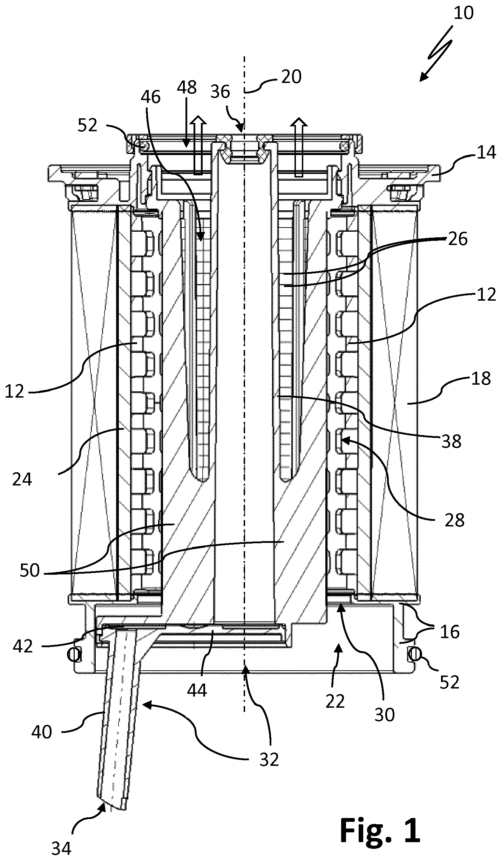

Fig. 1 zeigt einen Wasserabscheider 10 mit einem Stützrohr 12, das beidenends mit jeweils einer Endscheibe 14, 16 versehen ist. Eine erste Endscheibe 14 ist im Einbauzustand des Wasserabscheiders 10 in Richtung der Schwerkraft obenliegend angeordnet, während eine zweite Endscheibe 16 untenliegend bzw. nach unten weisend angeordnet ist.

Der Wasserabscheider 10 weist ein Filtermedium 18 auf, das zwischen den beiden Endscheiben 14, 16 ringförmig um das Stützrohr 12 herum angeordnet ist. Das Filtermedium 18 ist innenseitig einer zur Längsachse 20 des Wasserabscheiders 10 radialen Richtung am gitterförmig ausgebildeten Stützrohr 12 abgestützt. Das Filtermedium 18 kann endseitig mit den beiden Endscheiben 14, 16 verschweißt oder in das Material der beiden Endscheiben 14, 16 dichtend eingebettet sein. Das Filtermedium 18 ist vorliegend als ein sternförmig gefalteter Balg ausgebildet und von dem zu filternden Kraftstoff oder Öl in einer zur Längsachse 20 des Wasserabscheiders 10 radialen Richtung von außen nach innen durchströmbar.

Der Wasserabscheider 10 weist eine Wasserabscheideeinrichtung mit einem Koaleszermedium 24, einem als Endabscheider dienenden Siebrohr 26 und einem zwischen dem Siebrohr 26 und dem Stützrohr 20 ausgebildeten Wasserabscheidespalt 28 auf. Das Koaleszermedium 24 ist dem Partikelfiltermedium fluidisch nachgeschaltet (reinseitig) und in einer dem Partikelfiltermedium 18 entsprechenden Weise ringförmig um das Stützrohr 12 herum angeordnet. Das Koaleszermedium 24 liegt am Stützrohr 24 unmittelbar an und ist an diesem abgestützt. Es versteht sich, dass das Koaleszermedium 24 aus mehreren Koaleszerlagen gebildet sein kann, die sich insbesondere in ihren Materialeigenschaften bzw. in ihren Dicken voneinander unterscheiden können (z.B. Grobkoaleszerlage/Feinkoaleszerlage).

Der Wasserabscheider 10 weist einen Wasserauslass 30 auf, der mit dem Wasserabscheidespalt 28 fluidisch verbunden ist. Der Wasserabscheidespalt 28 ist somit nach unten hin offen ausgebildet. Der Wasserauslass 30 ist in einer zur Längsachse 20 des Wasserabscheiders 10 radialen Richtung außenseitig durch die untere zweite Endscheibe 16 begrenzt.

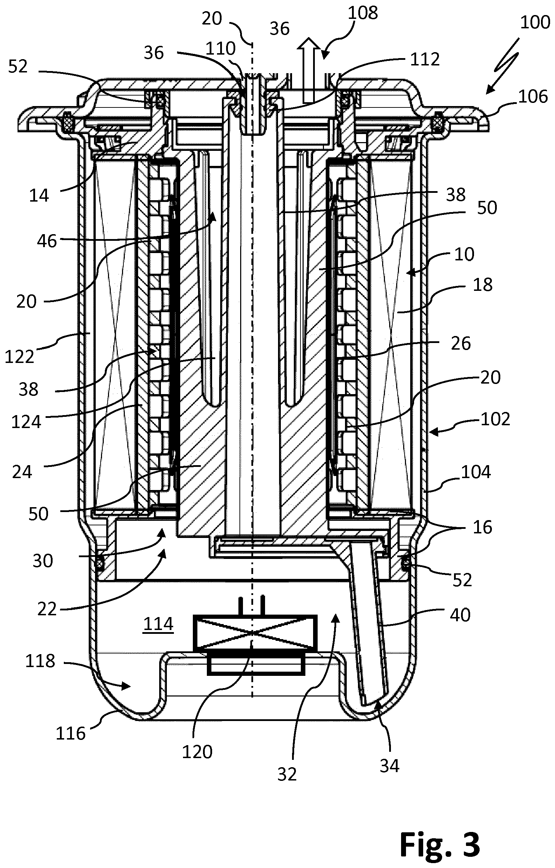

Der Wasserabscheider 10 weist eine in den Wasserabscheider integrierte Wasseraustragseinrichtung 32 für das Austragen von Wasser aus einer unterhalb des Wasserabscheiders 10 angeordneten Wassersammelkammer eines in Fig. 3 näher wiedergegebenen Abscheidergehäuses eines Wasserabscheidesystems auf. Die Wasseraustragseinrichtung 32 weist eine im Betriebseinsatz des Wasserabscheiders nach unten weisende Ansaug- oder Einlassöffnung 34 und eine obere Auslassöffnung 36 auf.

Die Auslassöffnung 36 ist koaxial zur Längsachse 20 des Wasserabscheiders 10 angeordnet und durch ein erstes Wasseraustragsrohr 38 gebildet. Das erste Wasseraustragsrohr 38 ist innerhalb des Siebrohrs 26 und zur Längsachse 20 des Wasserabscheiders 10 koaxial verlaufend angeordnet.

Die Einlassöffnung 34 der Wasseraustragseinrichtung 32 ist durch ein zweites Wasseraustragsrohr 40 gebildet, das sich von der den Wasserauslass 30 aufweisenden zweiten Endscheibe 16 in axialer Richtung wegerstreckt. Das zweite Wasseraustragsrohr 40 ist relativ zur Längsachse 20 in einer radialen Richtung versetzt am Wasserabscheider 10 angeordnet und kann, wie dies in Fig. 1 gezeigt ist, zur Längsachse 20 des Wasserabscheiders 10 schräg verlaufend angeordnet sein.

Das erste und das zweite Wasseraustragsrohr 38, 40 sind über einen radial verlaufenden Verbindungskanal 42 miteinander fluidisch verbunden. Der Verbindungskanal 42 ist nach unten hin durch eine Bodenscheibe 44 verschlossen.

Zwischen dem Siebrohr 26 und dem ersten Wasseraustragsrohr 38 ist ein Steigkanal 46 für den durch das Siebrohr strömenden Kraftstoff bzw. das Öl ausgebildet. Der Steigkanal 46 ist auslassseitig mit einem Fluidauslass 48 des Wasserabscheiders 10 für den aus dem Wasserabscheider strömenden Kraftstoff bzw. das Öl fluidisch verbunden.

Der Steigkanal 46 ist nach unten hin, hier im Bereich der zweiten Endscheibe 16, verschlossen.

Das erste Wasseraustragsrohr 38 und das Siebrohr 26 sind einstückig als ein einziges Kunststoff-Spritzgussteil ausgebildet und über rippen- oder flügelartige Distanzelemente 50 miteinander verbunden. Die Distanzelemente dienen einer innenseitigen Aussteifung des Siebrohrs 26.

Die Distanzelemente 50 dienen darüber hinaus einer Befestigung des Siebrohrs 26 und des ersten Wasseraustragsrohrs 38 an der ersten Endscheibe 14. Die Distanzelemente 50 können dazu, wie dies in Fig. 1 gezeigt ist, in die obere Endscheibe 14 eingeklipst sein. Die Bodenscheibe 44 ist gemeinsam mit dem an der Bodenscheibe 44 angeformten zweiten Wasseraustragsrohr 40 in die untere Endscheibe 16 des Wasserabscheiders 10 eingeklipst.

Die beiden Endscheiben 14, 16 weisen jeweils ein (Radial-)Dichtungselement 52 zur dichtenden Anlage des Wasserabscheiders 10 an einem Abscheidergehäuse eines Wasserabscheidesystems auf. Die Dichtungselemente 52 sind jeweils in einer nicht näher bezeichneten Ringnut der jeweiligen Endscheibe 14, 16 angeordnet.

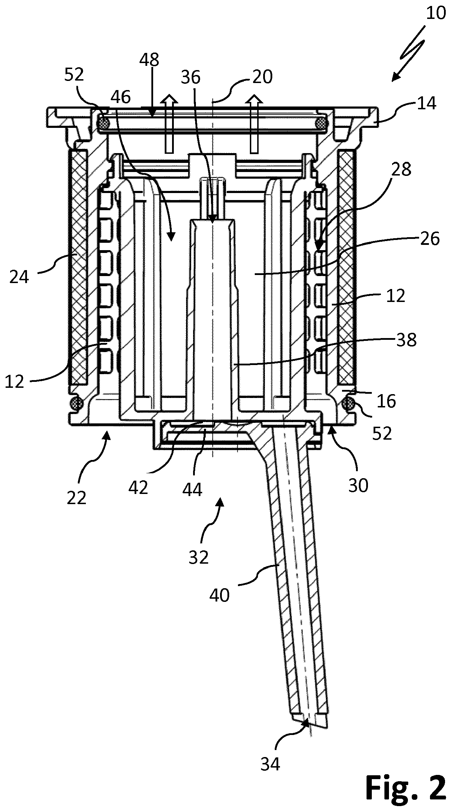

Fig. 2 zeigt ein weiteres Ausführungsbeispiel des Wasserabscheiders 10. Der Wasserabscheider 10 unterscheidet sich von dem in Fig. 1 gezeigten Wasserabscheider im Wesentlichen darin, dass dieser kein Filtermedium aufweist. Darüber hinaus sind beide Endscheiben 14, 16 mit dem Stützrohr 12 einstückig als ein einziges Kunststoff-Spritzgussteil ausgeführt. Das erste Wasseraustragsrohr 38 ist kürzer ausgeführt und erstreckt sich nicht vollständig durch den Wasserabscheider 10 hindurch. Die Auslassöffnung 36 des ersten Wasseraustragsrohrs 38 ist dadurch in axialer Richtung zwischen den beiden Endscheiben 14, 16 angeordnet.

Fig. 3 zeigt ein Wasserabscheidesystem 100 in einem Längsschnitt. Das Wasserabscheidesystem 100 umfasst ein Abscheidergehäuse 102 mit einer Gehäusewanne 104 und mit einem Gehäusedeckel 106. Das Abscheidergehäuse 102 kann sowohl aus Kunststoff als auch aus Metall bestehen. In dem Abscheidergehäuse 100 ist ein vorstehend im Zusammenhang mit Fig. 1 erläuterter Wasserabscheider 10 angeordnet. Der Gehäusedeckel 106 weist einen nicht näher gezeigten Fluideinlass für den dem Wasserabscheider 10 zuzuführenden Kraftstoff bzw. das dem Wasserabscheider zuzuführende Öl und einen Fluidauslass 108 für den aus dem Wasserabscheider herausströmenden Kraftstoff bzw. das Öl auf. Ein Wasseraustragsstutzen 110 des Abscheidergehäuses 102 ist in die Auslassöffnung 36 des ersten Wasseraustragsrohrs 40 des Wasserabscheiders 10 dichtend eingeführt. Der Wasserauslassstutzen ist mittels eines Dichtrings 112 gegenüber dem ersten Wasseraustragsrohr 38 umfangsseitig gedichtet. Das Wasserabscheidesystem 100 weist einen Wassersammelraum 114 zur Aufnahme des aus dem Kraftstoff oder dem Öl abgeschiedenen Wassers auf. Der Wassersammelraum 114 ist im Betriebszustand des Wasserabscheidesystems 100 unterhalb des Wasserabscheiders 10 angeordnet, so dass das im Wasserabscheider 10 abgeschiedene Wasser - der Schwerkraft folgend - über den Wasserauslass 30 des Wasserabscheiders 10 in den Wassersammelraum 114 gelangt.

Der Wassersammelraum 114 weist am Gehäuseboden 116 eine Vertiefung 118 auf, die zur Längsachse 20 des Wasserabscheiders 10 seitlich versetzt angeordnet ist. Die Vertiefung 118 kann, wie dies in Fig. 3 gezeigt ist, ringförmig ausgebildet sein und somit die Längsachse 20 des Wasserabscheiders 10 ringförmig umgreifen. Die Einlassöffnung 34 der Wasseraustragseinrichtung 32 des Wasserabscheiders 10 ist durch das sich in die Vertiefung 118 hineinerstreckende zweite Wasseraustragsrohr 40 des Wasserabscheiders 10 innerhalb der Vertiefung 118 und nahe zum Gehäuseboden 116 angeordnet. Dadurch wird bei Bedarf ein vollständiger bzw. nahezu vollständiger Wasseraustrag von im Wassersammelraum 114 angesammeltem Wasser über den Wasserabscheider 10 in Richtung nach oben ermöglicht. Am Gehäuseboden 116 des Abscheidergehäuses 102 ist ein Wasserstandsensor 120 montiert, mittels dessen ein maximal zulässiger Wasserfüllstand im Wassersammelraum 114 erfassbar ist. Der Wasserstandsensor ist auf der Längsachse des Wasserabscheiders 10 montiert.

Der Wasserabscheider 10 liegt über die Dichtungselemente 52 seiner beiden Endscheiben 14, 16 am Abscheidergehäuse innenseitig dichtend an. Durch die Dichtungselemente 14, 16 sind eine dem Filtermedium 18 des Wasserabscheiders 10 fluidisch vorgeschaltete Rohseite 122 und eine dem Filtermedium fluidisch nachgeschaltete Reinseite 124 des Wasserabscheiders 10 bzw. des Abscheidesystems 100 gegeneinander abgedichtet.

## Patentansprüche

1. Wasserabscheider (10) für in Kraftstoff oder Öl enthaltenes Wasser, umfassend:
- einen Wasserauslass (30) für das aus dem Kraftstoff oder Öl abgeschiedene Wasser; und
- eine Wasseraustragseinrichtung (32) mit einer Einlass- und mit einer Auslassöffnung (34, 36) für das aus dem Wasserabscheider (10) herausgeführte Wasser,
wobei die Einlassöffnung (34) zur Längsachse (20) des Wasserabscheiders (10) exzentrisch und vom Wasserauslass (30) axial beabstandet am Wasserabscheider angeordnet ist und wobei die Auslassöffnung (36) zur Längsachse (20) des Wasserabscheiders (10) koaxial am Wasserabscheider angeordnet ist, wobei die Einlassöffnung (34) und die Auslassöffnung (36) der Wasseraustragseinrichtung (32) mittels eines ersten Wasseraustragsrohrs (38) fluidisch miteinander verbunden sind, das innerhalb des Wasserabscheiders (10) in Richtung der Längsachse (20) des Wasserabscheiders (10) verlaufend angeordnet ist und wobei das erste Wasseraustragsrohr (38) zur Längsachse (20) des Abscheiders (10) koaxial verlaufend angeordnet ist, wobei das erste Wasseraustragsrohr (38) die Auslassöffnung (36) bildet, **dadurch gekennzeichnet, dass** die Einlassöffnung (34) der Wasseraustragseinrichtung (32) durch ein zweites Wasseraustragsrohr (40) gebildet ist, das in einer zur Längsachse des Wasserabscheiders (10) radialen Richtung versetzt am Wasserabscheider angeordnet ist, wobei das zweite Wasseraustragsrohr (40) und das erste Wasseraustragsrohr (38) über einen in radialer Richtung verlaufend angeordneten Verbindungskanal (42) miteinander fluidisch verbunden sind, und dass der Verbindungskanal (42) axial in Richtung der Einlassöffnung (34) der Wasseraustragseinrichtung (32) durch eine Bodenscheibe (44) verschlossen ist, die an dem zweiten Wasseraustragsrohr (38) angeformt ist.

2. Wasserabscheider nach Anspruch 1, **dadurch gekennzeichnet, dass** der Wasserauslass (30) des Wasserabscheiders zumindest abschnittsweise durch eine untere Endscheibe (14) des Wasserabscheiders (10) begrenzt ist.

3. Wasserabscheider nach einem der vorhergehenden Ansprüche, **dadurch gekennzeichnet, dass** der Wasserabscheider (10) ein Stützrohr (12) und ein innerhalb des Stützrohrs (12) angeordnetes Siebrohr (26) aufweist, die gemeinsam einen Wasserabscheidespalt (28) begrenzen, wobei der Wasserabscheidespalt (28) einenends mit dem Wasserauslass (30) des Wasserabscheiders (10) fluidisch verbunden ist.

4. Wasserabscheider nach Anspruch 3, **dadurch gekennzeichnet, dass** ein Koaleszermedium (24) und/oder ein Filtermedium (18) ringförmig um das Stützrohr (12) herum angeordnet und an dem Stützrohr (12) abgestützt ist/sind.

5. Wasserabscheider nach Anspruch 3 oder 4, **dadurch gekennzeichnet, dass** zwischen dem Siebrohr und dem ersten Wasseraustragsrohr (38) ein Steigkanal (46) für das Fluid ausgebildet ist, der mit einem Fluidauslass (48) des Wasserabscheiders (10) fluidisch verbunden ist.

6. Wasserabscheider nach einem der Ansprüche 3 bis 5, **dadurch gekennzeichnet, dass** das erste Wasseraustragsrohr (38) und das Siebrohr (26), vorzugsweise als Spritzgussteil, einstückig miteinander ausgebildet sind.

7. Wasserabscheider nach einem der Ansprüche 3 bis 6, **dadurch gekennzeichnet, dass** das Stützrohr (12), die erste Endscheibe (14, 16) und eine zweite Endscheibe des Wasserabscheiders, vorzugsweise als Spritzgussteil, einstückig miteinander ausgebildet sind.

8. Wasserabscheider nach einem der vorhergehenden Ansprüche, **dadurch gekennzeichnet, dass** der Wasserabscheider (10) beidenends mit einer Endscheibe versehen ist, wobei die beiden Endscheiben jeweils ein Dichtungselement (52) zur umlaufend dichten Anlage des Wasserabscheiders(10) an einem Abscheidergehäuse (102) eines Wasserabscheidesystems (100) aufweisen.

9. Wasserabscheider nach Anspruch 8, **dadurch gekennzeichnet, dass** das Dichtungselement (52) in einer innenumfangsseitig oder außenumfangsseitig angeordneten Ringnut der Endscheibe (14, 16) angeordnet ist.

10. Wasserabscheidesystem (100) umfassend ein Abscheidergehäuse (102) mit einem darin angeordneten Wasserabscheider (10) nach einem der vorhergehenden Ansprüche und mit einem Wassersammelraum (114), der unterhalb des Wasserauslasses (30) des Wasserabscheiders (10) angeordnet ist und in den sich das zweite Wasseraustragsrohr (40) der Wasseraustragseinrichtung (32) mit seiner Einlassöffnung (34) hineinerstreckt, wobei das Abscheidergehäuse (102) einen Wasseraustragsstutzen (110) aufweist, der mit der Auslassöffung (36) der Wasseraustragseinrichtung (32) des Wasserabscheiders (10) fluidisch verbunden ist.

11. Wasserabscheidesystem (100) nach Anspruch 10, **dadurch gekennzeichnet, dass** der Wassersammelraum (114) eine Vertiefung (118) aufweist, die zur Längsachse (20) des Wasserabscheiders (10) seitlich versetzt angeordnet ist und in die sich das zweite Wasseraustragrohr (40) des Wasserabscheiders (10) hineinerstreckt.

## Claims

1. Water separator (10) for water contained in fuel or oil, comprising:
- a water outlet (30) for the water separated from fuel or oil; and
- a water discharge device (32) with an inlet port and an outlet port (34, 36) for the water discharged from the water separator (10),
wherein the inlet port (34) is disposed eccentrically in relation to the longitudinal axis (20) of the water separator (10) and axially spaced apart from the water outlet (36) at the water separator and wherein the outlet port (36) is disposed coaxially at the water separator in relation to the longitudinal axis (20) of the water separator (10), wherein the inlet port (34) and the outlet port (36) of the water discharge device (32) are connected fluidically with each other by means of a first water discharge tube (38) which is arranged to extend inside the water separator (10) in the direction of the longitudinal axis (20) of the water separator (10) and wherein the first water discharge tube (38) is arranged to extend coaxially in relation to the longitudinal axis (20) of the separator (10), wherein the first water discharge tube (38) forms the outlet port (36), **characterized in that** the inlet port (34) of the water discharge device (32) is formed by means of a second water discharge tube (40) which is arranged offset in relation to the longitudinal axis of the water separator (10) in a radial direction at the water separator, wherein the second water discharge tube (40) and the first water discharge tube (38) are fluidically connected with each other via a connecting channel arranged to extend in radial direction, and that the connecting channel (42) is axially closed in the direction of the inlet port (34) of the water discharge device (32) by means of a bottom disk (44) which is integrally molded to the second water discharge tube (38).

2. Water separator according to claim 1, **characterized in that** the water outlet (30) of the water separator is delimited at least sectionwise by a lower end disk (14) of the water separator (10).

3. Water separator according to one of the above claims, **characterized in that** the water separator (10) features a support tube (12) and a strainer tube (26) disposed inside the support tube (12) which together delimit a water separation gap (28), wherein the water separation gap (28) is fluidically connected at one end to the water outlet (30) of the water separator (10).

4. Water separator according to claim 3, **characterized in that** a coalescer medium (24) and/or a filter medium (18) is/are disposed annularly around the support tube (12) and supported by the support tube (12).

5. Water separator according to claim 3 or 4, **characterized in that** a riser duct (46) for the fluid, which is fluidically connected to a fluid outlet (48) of the water separation (13), is realized between the strainer tube and the first water discharge tube (38).

6. Water separator according to one of the claims 3 to 5, **characterized in that** the first water discharge tube (38) and the strainer tube (26) are realized, preferably as injection-molded part, in one piece.

7. Water separator according to one of the claims 3 to 6, **characterized in that** the support tube (12), the first end disk (14, 16) and a second end disk of the water separator are realized, preferably as injection-molded part, in one piece.

8. Water separator according to one of the above claims, **characterized in that** the water separator (10) is provided with an end disk at both ends, wherein both end disks feature each a gasket element (52) to ensure a tight circumferential contact of the water separator (10) at a separator housing (102) of a water separation system (100).

9. Water separator according to claim 8, **characterized in that** the gasket element (52) is disposed in an annular groove of the end disk (14, 16) disposed on the inner circumferential side or on the outer circumferential side.

10. Water separation system (100) comprising a separator housing (102) with a water separator (10) disposed therein according to one of the above claims and with a water-collecting chamber (114) which is disposed under the water outlet (30) of the water separator (10) and into which extends the second water discharge tube (40) of the water discharge device (32) with its inlet port (34), wherein the separator housing (102) features a water discharge nozzle (110) which is fluidically connected to the outlet port (36) of the water discharge device (32) of the water separator (10).

11. Water separation system (100) according to claim 10, **characterized in that** the water-collecting chamber (114) features a recess (118) which is laterally offset in relation to the longitudinal axis (20) of the water separator (10) and into which extends the second water discharge tube (40) of the water separator (10).

## Revendications

1. Séparateur d'eau (10) pour l'eau contenue dans le carburant ou dans l'huile, comprenant :
- un écoulement d'eau (30) pour l'eau séparée du carburant ou de l'huile; et
- un dispositif d'évacuation d'eau (32) avec un orifice d'admission et un orifice de sortie (34, 36) pour l'eau évacuée du séparateur d'eau (10),
l'orifice d'admission (34) étant disposé de manière excentrique par rapport à l'axe longitudinal (20) du séparateur d'eau (10) et espacé axialement de l'écoulement d'eau (30) sur le séparateur d'eau et l'orifice de sortie (36) étant disposé de manière coaxiale par rapport à l'axe longitudinal (20) du séparateur d'eau (10) sur le séparateur d'eau, l'orifice d'admission (34) et l'orifice de sortie (36) du dispositif d'évacuation d'eau (32) étant reliés l'un à l'autre fluidiquement au moyen d'un premier tube d'évacuation d'eau (38) qui est disposé à l'intérieur du séparateur d'eau (10) et s'étendant dans le sens de l'axe longitudinal (20) du séparateur d'eau (10) et le premier tube d'évacuation d'eau (38) étant disposé pour s'étendre de manière coaxiale par rapport à l'axe longitudinal (20) du séparateur (10), le premier tube d'évacuation d'eau (38) formant l'orifice de sortie (36), **caractérisé en ce que** l'orifice d'admission (34) du dispositif d'évacuation d'eau (32) est formé par un deuxième tube d'évacuation d'eau (40) qui est disposé de manière décalée par rapport à l'axe longitudinal du séparateur d'eau (10) dans un sens radial sur le séparateur d'eau, le deuxième tube d'évacuation d'eau (40) et le premier tube d'évacuation d'eau (38) étant reliés l'un à l'autre fluidiquement au moyen d'un canal de jonction (42) disposé pour s'étendre en sens radial, et que le canal de jonction (42) est fermé de manière axiale dans le sens de l'orifice d'admission (34) du dispositif d'évacuation d'eau (32) par un disque de fond (44) qui est moulé sur le deuxième tube d'évacuation d'eau (38).

2. Séparateur d'eau selon la revendication 1, **caractérisé en ce que** l'écoulement d'eau (30) du séparateur d'eau est délimité au moins sur certaines sections par un disque d'extrémité inférieur (14) du séparateur d'eau (10).

3. Séparateur d'eau selon l'une des revendications précédentes, **caractérisé en ce que l**e séparateur d'eau (10) est doté d'un tube de support (12) et d'une crépine (26) disposée à l'intérieur du tube de support (12) qui délimitent ensemble une fente de séparation d'eau (28), la fente de séparation d'eau (28) étant reliée fluidiquement à une extrémité à l'écoulement d'eau (30) du séparateur d'eau (10).

4. Séparateur d'eau selon la revendication 3, **caractérisé en ce qu'**un milieu coalescent (24) et/ou un milieu filtrant (18) est disposé/sont disposés en forme d'anneau autour du tube de support (12) et supporté/supportés par le tube de support (12).

5. Séparateur d'eau selon la revendication 3 ou 4, **caractérisé en ce qu'**entre la crépine et le premier tube d'évacuation d'eau (38) est réalisé un canal montant (46) pour le fluide qui est relié fluidiquement à une sortie de fluide (48) du séparateur d'eau (10).

6. Séparateur d'eau selon l'une des revendications 3 à 5, **caractérisé en ce que** le premier tube d'évacuation d'eau (38) et la crépine (26) sont réalisés, de préférence sous forme de pièce moulée par injection, en un seul bloc.

7. Séparateur d'eau selon l'une des revendications 3 à 6, **caractérisé en ce que** le tube de support (12), le premier disque d'extrémité (14, 16) et un deuxième disque d'extrémité du séparateur d'eau sont réalisés, de préférence sous forme de pièce moulée par injection, en un seul bloc.

8. Séparateur d'eau selon l'une des revendications précédentes, **caractérisé en ce que** le séparateur d'eau (10) est doté aux deux extrémités d'un disque d'extrémité, les deux disques d'extrémité présentant chacun un élément d'étanchéité (52) pour un contact étanche sur le pourtour du séparateur d'eau (10) sur un boîtier de séparateur (102) d'un système de séparation d'eau (100).

9. Séparateur d'eau selon la revendication 8, **caractérisé en ce que** l'élément d'étanchéité (52) est disposé dans une rainure annulaire du disque d'extrémité (14, 16) disposée sur le côté périphérique intérieur ou sur le côté périphérique extérieur.

10. Système de séparation d'eau (100) comprenant un boîtier de séparateur (102) avec un séparateur d'eau (10) disposé dans ce boîtier selon l'une des revendications précédentes et avec un collecteur d'eau (114) placé en dessous de l'écoulement d'eau (30) du séparateur d'eau (10) et dans lequel s'étend le deuxième tube d'évacuation d'eau (40) du dispositif d'évacuation d'eau (32) avec son orifice d'admission (34), le boîtier de séparateur (102) présentant une tubulure d'évacuation d'eau (110) reliée fluidiquement à l'orifice de sortie (36) du dispositif d'évacuation d'eau (32) du séparateur d'eau (10).

11. Système de séparation d'eau (100) selon la revendication 10, **caractérisé en ce que** le collecteur d'eau (114) présente une cavité (118) qui est disposée de façon décalée latéralement par rapport à l'axe longitudinal (20) du séparateur d'eau (10) et dans laquelle s'étend le deuxième tube d'évacuation d'eau (40) du séparateur d'eau (10).
